# NEW EUROPEAN PATENT SPECIFICATION

(11) **EP 2 573 028 B2**
(45) Date of publication and mention of the opposition decision: **07.11.2018**
(45) Mention of the grant of the patent: 25.03.2015
(21) Application number: 12182976.6
(22) Date of filing: 04.09.2012
(51) Int. Cl.: B65H 59/40, B65H 63/02, G01L 25/00, G01L 5/10

(54) **Yarn winding apparatus and method of checking yarn tension**
Garnwickelvorrichtung und Verfahren zur Überprüfung der Garnspannung
Appareil de bobinage de fils et procédé de contrôle de tension de fil

(30) Priority: 21.09.2011 JP 2011206618
(43) Date of publication of application: 27.03.2013
(73) Proprietor: Murata Machinery, Ltd., Minami-ku, Kyoto 601-8326 (JP)
(72) Inventor: Imamura, Hisakatsu, Kyoto-shi, Kyoto, 612-8686 (JP); Murayama, Kenichi, Kyoto-shi, Kyoto, 612-8686 (JP)
(74) Representative: Zimmermann, Tankred Klaus

(56) References cited:
- DE-A1- 19 500 517
- DE-A1- 19 940 161
- JP-A- H06 300 648
- US-A- 4 546 656
- US-A1- 2002 166 917

## Description

### BACKGROUND OF THE INVENTION

### 1. Field of the Invention

The present invention relates to a yarn winding apparatus that winds a yarn supplied from a yarn supplying bobbin to form a package. The present invention also relates to a method of checking a yarn tension implemented in the yarn winding apparatus.

### 2. Description of the Related Art

Yarn winding apparatuses that wind a yarn supplied from a yarn supplying bobbin to form a package are known in the art. Such yarn winding apparatuses include a function for detecting an abnormality in the yarn winding apparatus. For example, an automatic winder disclosed in Japanese Patent Application Laid-open No. 2009-242098 includes a tension sensor that measures a yarn tension of a yarn that is passing through a yarn path, and a component-operation-failure detecting section that detects, based on the yarn tension measured by the tension sensor, a component whose operation has failed. Variations in the yarn tension is patterned and stored for each component of the automatic winder. When an abnormal variation is detected in the yarn tension measured by the tension sensor, the measured tarn tension is compared with the previously stored tension patterns, and it is determined whether an operation failure of the component has occurred based on the comparison.

DE 195 00 517 A1 discloses a method for calibrating yarn tension sensors at machines processing synthetic fibre filament materials. Calibration values are determined and stored in an evaluation unit.

Systems in which yarn tension is measured in winding devices for calibration purposes are also disclosed in US 2002/166917 A1, JP H06 300648 A and US 4 546 656 A.

### SUMMARY OF THE INVENTION

It is an object of the present invention to provide a yarn winding apparatus in which it is possible to easily check the measurement accuracy of the tension sensor, and a method of checking a yarn tension implemented in such a yarn winding apparatus.

This object is achieved by a yarn winding apparatus according to claim 1, and by a method according to claim 3.

The inventors found out that in an automatic winder, like the one disclosed in Japanese Patent Application Laid-open No. 2009-242098, the yarn tension measured by the tension sensor is assumed to be accurate, and deterioration of a measurement accuracy of the tension sensor itself cannot be detected. Because the measurement accuracy of the tension sensor affects the density, etc., of the package formed by the yarn winding apparatus, it is desirable to regularly check whether the measurement accuracy of the tension sensor is within a predetermined range. However, because the tension sensor needs to be detached from the yarn winding apparatus when measuring the measurement accuracy of the tension sensor with a measuring instrument, the task of checking the measurement accuracy is difficult for an onsite operator.

According to an aspect of the present invention, a yarn winding apparatus includes a tension sensor that measures a yarn tension of a yarn wound to form a package; and a calibration mechanism that calibrates correspondence between an electric signal output by the tension sensor and a tension value corresponding to the electric signal. A control section is adapted to execute a plurality of operating modes, wherein the operating modes include a calibration mode for performing calibration by using the calibration mechanism. A tension applying section is adapted to apply a predetermined tension to the yarn, wherein the operating modes include a winding mode in which a yarn is unwound from a yarn supplying bobbin and then wound to form a package, and the control section is adapted to cause the tension applying section to hold the yarn such that the predetermined tension is generated in the yarn when the operating mode is the winding mode, and to cause the tension applying section to release the yarn when the operating mode is the calibration mode. The yarn winding apparatus includes an adjustment section adapted to adjust the relation between the yarn tension measured by the tension sensor and the tension applied to the yarn in the calibration mode.

According to another aspect of the present invention, a method of checking a yarn tension that is implemented in the above yarn winding apparatus includes switching the operating mode to the calibration mode by the control section; applying a known tension to the yarn after performing the switching; measuring a yarn tension with the tension sensor after performing the applying; and displaying the tension measured by the tension sensor.

The above and other objects, features, advantages and the technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a front view of a winding unit that is a yarn winding apparatus according to an embodiment of the present invention;
FIG. 2 is a vertical cross-sectional view of a tension sensor that is a tension measuring device according to the embodiment of the present invention;
FIG. 3 is a cross-sectional view of the tension sensor along a line III-III shown in FIG. 2;
FIG. 4 is an exploded perspective view of a part of the tension sensor shown in FIG. 2;
FIG. 5 is a flowchart for explaining an adjustment method of the tension sensor; and
FIG. 6 is a graphical representation of an example of a display value table.

### DETAILED DESCRIPTION OF THE PREFERRED EMBODIMENTS

Exemplary embodiments of the present invention are explained in detail below with reference to the accompanying drawings. The same reference numerals are assigned to the parts that are identical or equivalent and duplicating explanation is omitted.

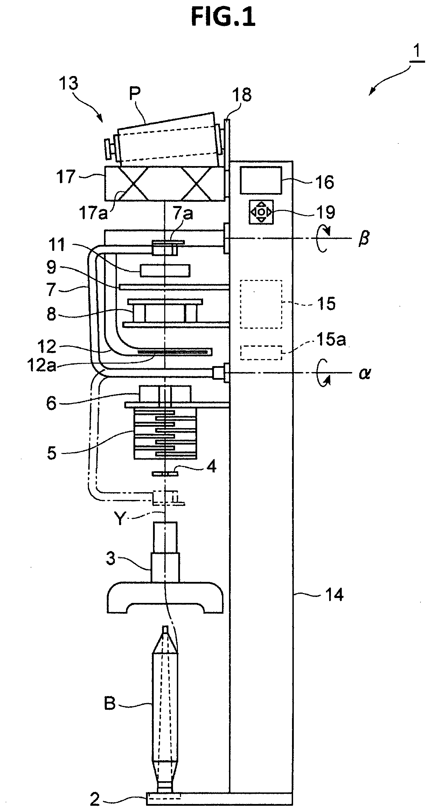

As shown in FIG. 1, a winding unit (yarn winding apparatus) 1 winds a yarn Y supplied from a yarn supplying bobbin B to form a package P. The yarn supplying bobbin B is formed by a front-end spinning machine, and, for example, the yarn supplying bobbin B is conveyed from the spinning machine to the winding unit 1 by being set in a tray. An automatic winder is formed by arranging a plurality of the winding units 1 side-by-side.

In the winding unit 1, a bobbin supporting section 2, a yarn unwinding assisting device 3, a pre-clearer 4, a gate-type tenser (tension applying section) 5, a tension sensor (tension measuring device) 6, a lower-yarn catching device 7, a splicer 8, a cutter 9, a yarn clearer 11, an upper-yarn catching device 12, and a winding section 13 are sequentially arranged from an upstream side (bottom in FIG. 1) along a running path (that is, a yarn path) of the yarn Y. All the parts mentioned above are mounted on a machine base 14. A control section 15 (control section and adjustment section), a storage section 15a, a display unit (display section) 16, and an operation section 19 are arranged in the winding unit 1.

The bobbin supporting section 2 supports the yarn supplying bobbin B in an upright state. The yarn unwinding assisting device 3 controls a balloon of the yarn Y unwound from the yarn supplying bobbin B by using a cylindrical member arranged above the yarn supplying bobbin B. The gate-type tenser 5 holds the yarn Y in a zigzag shape with a pair of gates formed of a comb-teeth-like fixed gate and a comb-teeth-like movable gate, thereby applying a predetermined tension on the running yarn Y. The tension sensor 6 measures a yarn tension of the yarn Y running along the yarn path.

The pre-clearer 4 restricts, in advance, passing of a yarn defect that is larger than a stipulated value by using restricting units arranged at a predetermined interval on the yarn path. The restricting unit includes a pair of restricting members arranged on either side of the yarn path. Thus, the yarn clearer 11 detects a yarn defect, such as, a slub when the yarn Y is being wound. The cutter 9 cuts the yarn Y when passing of the yarn defect is restricted by the pre-clearer 4 or when a yarn defect is detected by the yarn clearer 11. The splicer 8 joins one yarn end from the yarn supplying bobbin B and other yarn end from the package P when the yarn Y is cut by the cutter 9, or when the yarn Y is accidentally broken.

The lower-yarn catching device 7 has a turning end that can be turned upward and downward about an axis α. A suction vent 7a is arranged at an end of the turning end of the lower-yarn catching device 7. The suction vent 7a turns between an upper portion of the splicer 8 and a lower portion of the pre-clearer 4. The upper-yarn catching device 12 also has a turning end that can be turned upward and downward about an axis β. A suction vent 12a is arranged at an end of the turning end of the upper-yarn catching device 12. The suction vent 12a turns between a lower portion of the splicer 8 and the winding section 13. The lower-yarn catching device 7 turns downward and sucks the yarn end on the yarn supplying bobbin B side by using the suction vent 7a. Subsequently, the lower-yarn catching device 7 turns upward and delivers the yarn end on the yarn supplying bobbin B side to the splicer 8. On the other hand, the upper-yarn catching device 12 turns upward and sucks the yarn end on the package P side by using the suction vent 12a. Thereafter, the upper-yarn catching device 12 turns downward and delivers the yarn end on the package P side to the splicer 8.

The winding section 13 unwinds the yarn Y from the yarn supplying bobbin B and winds the yarn Y onto the package P to form a fully wound package P. The winding section 13 includes a winding drum 17 with a drum groove 17a formed on the surface thereof, and a cradle 18 that rotatably supports the package P. The cradle 18 causes a surface of the package P to come in contact with a surface of the winding drum 17 with an appropriate contact pressure. The winding section 13 drives the winding drum 17 to rotate by a not shown motor and causes the package P to rotate following the rotation of the winding drum 17. Thus, the winding section 13 winds the yarn Y into the package P while causing the yarn Y to traverse a predetermined width.

The tension sensor 6 is explained in greater detail below. In the following explanation, for the sake of convenience, the upstream side of the tension sensor 6 in the yarn path is referred to as a lower side, a side opposite to the upstream side is referred to as an upper side, a side from where the yarn Y is guided in and out from the yarn path of the tension sensor 6 is referred to as a front side, and a side opposite to the front side is referred to as a back side.

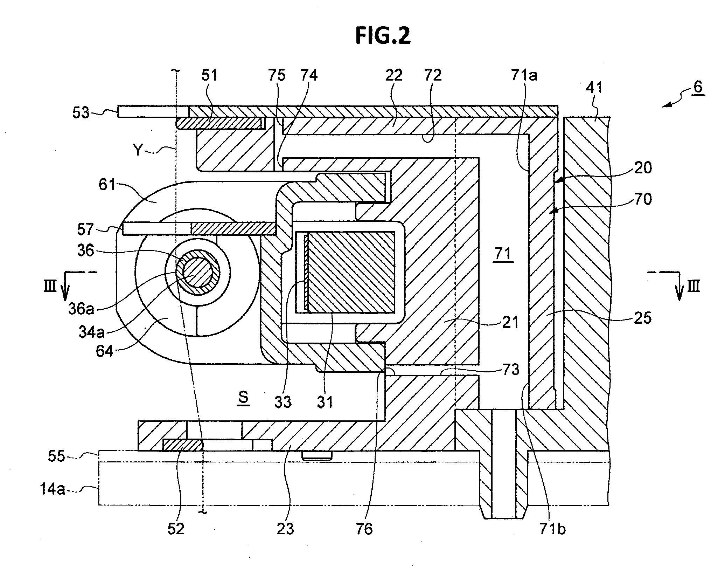

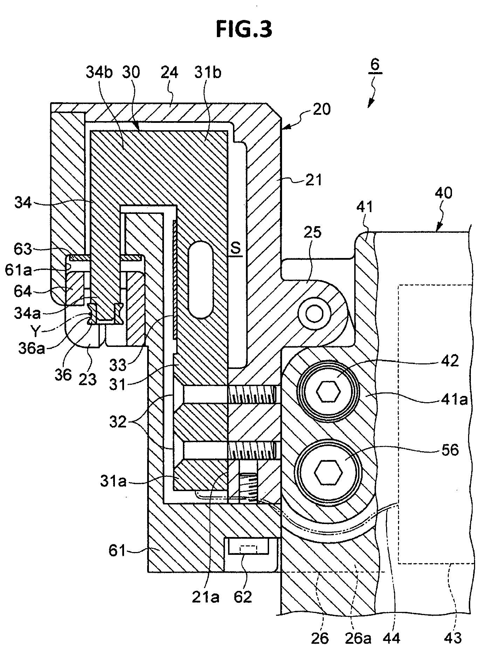

As shown in FIGS. 2 and 3, the tension sensor 6 includes a base 20 that is integrally formed with metal. The base 20 includes a side wall portion (first wall portion) 21 that surrounds a space S, an upper wall portion 22, a lower wall portion 23, and a rear wall portion 24. The base 20 further includes a vertical wall portion 25 that extends in a vertical direction outside the side wall portion 21 (that is, a side opposite to the space S), and a horizontal wall portion (second wall portion) 26 that extends from a lower end portion of the vertical wall portion 25 toward the front side. The horizontal wall portion 26 is substantially perpendicular to the side wall portion 21.

A deforming member 30 that deforms upon coming into contact with the yarn Y is mounted on a side surface 21a that is an inner side of a front end portion of the side wall portion 21 (that is, on the space S side). The deforming member 30 includes a load cell member 31 and a rod member 34 that are integrally formed with metal. The detailed structure of the deforming member 30 is explained below.

That is, a front end portion 31a of the load cell member 31 is mounted on the side surface 21a of the side wall portion 21 with bolts 32. The load cell member 31 is formed of a rectangular parallelpiped shaped metal that extends in forward and backward directions. A strain gauge 33 is arranged, by printing, etc., on a side surface of the load cell member 31. A rear end portion 34b of the rod member 34 is connected to a rear end portion (other end portion) 31b of the load cell member 31. The rod member 34 is formed in a cylindrical shape that extends in forward and backward directions (meanwhile, the rear end portion 34b is formed in a rectangular parallelpiped shape). A contact portion 36 that comes into contact with the yarn Y from the side wall portion 21 side is arranged on a front end portion 34a. The contact portion 36 is formed in a cylindrical shape with a material, such as ceramic, that has a low frictional resistance with the yarn Y and that is less abrasive. A groove 36a is provided on a periphery of the contact portion 36 so that the yarn Y can stably come into contact with the contact portion 36.

A yarn guide 51 that comes into contact with the yarn Y from the side wall portion 21 is mounted on the upper wall portion 22 of the base 20. A yarn guide 52 that comes into contact with the yarn Y from the opposite side of the side wall portion 21 is mounted on the lower wall portion 23 of the base 20. The yarn guides 51 and 52 are formed in a plate-shape with a material, such as ceramic, that has a low frictional resistance with the yarn Y and that is less abrasive. In this manner, the yarn Y running along the yarn path comes into contact with three portions, namely, the contact portion 36 of the rod member 34 and each of the yarn guides 51 and 52, and is bent by a predetermined angle, and depending on the yarn tension, a strain is generated on the load cell member 31 via the rod member 34. Once the strain is generated on the load cell member 31, an electric signal corresponding to the magnitude of the strain on the load cell member 31 is output from the strain gauge 33.

A detection section 40 that detects the yarn tension as an electric signal based on the deformation of the deforming member 30 is mounted on an upper surface 26a of the horizontal wall portion 26 of the base 20. The upper surface 26a of the horizontal wall portion 26 is substantially perpendicular to the side surface 21a of the side wall portion 21. The detection section 40 includes a casing 41 and a circuit board 43. A detailed structure of the detection section 40 is explained below.

That is, a mounting section 41a of the casing 41 that is arranged parallel to the base 20 on the opposite side of the space S is mounted on the upper surface 26a of the horizontal wall portion 26 with a bolt 42. The casing 41 is formed in a rectangular parallelpiped shape with a resin. The casing 41 houses the circuit board 43 that processes an electric signal so as to detect the yarn tension as the electric signal. The circuit board 43 is electrically connected to the strain gauge 33 via a wiring 44. The circuit board 43 acquires the electric signal corresponding to a magnitude of the strain on the load cell member 31 from the strain gauge 33 and outputs the yarn tension as the electric signal based on the acquired electric signal.

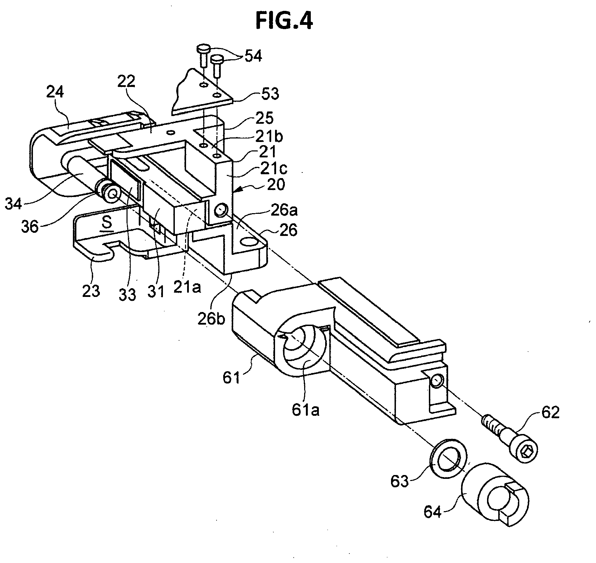

As shown in FIGS. 2 and 4, a guide plate 53 is arranged above the base 20 for guiding the yarn Y to the yarn guide 51 when introducing the yarn Y into the yarn path of the tension sensor 6. The guide plate 53 is fixed to an upper end surface 21b of the side wall portion 21 of the base 20 with bolts 54. A guide plate 55 is arranged below the base 20 for guiding the yarn Y to the yarn guide 52 when introducing the yarn Y into the yarn path of the tension sensor 6. The guide plate 55 is mounted on a pedestal 14a arranged on the machine base 14 side of the winding unit 1. The pedestal 14a is mounted on a lower surface 26b of the horizontal wall portion 26 of the base 20 with a bolt 56 (see FIG. 3), thus supporting the tension sensor 6. Each of the upper end surface 21b of the side wall portion 21 and the lower surface 26b of the horizontal wall portion 26 are substantially perpendicular to the side surface 21a of the side wall portion 21.

As shown in FIGS. 3 and 4, a cover 61, which is formed of resin, is mounted on a front end surface 21c of the side wall portion 21 of the base 20 with a bolt 62. The cover 61 covers the deforming member 30 between the upper wall portion 22 and the lower wall portion 23 of the base 20. The front end surface 21c of the side wall portion 21 is substantially perpendicular to the side surface 21a of the side wall portion 21. A recess 61a is formed on the cover 61 such that the recess 61a causes the front end portion 34a of the rod member 34 that supports the yarn Y to protrude. At the bottom of the recess 61a is arranged the rod member 34 surrounded by a circular elastic member 63 with a small gap in between the rod member 34 and the circular elastic member 63. The circular elastic member 63 has adhesive properties. Accordingly, a surrounding member 64, which is formed of resin, is fitted into the recess 61a. The surrounding member 64 surrounds the front end portion 34a of the rod member 34 while exposing a contact position of the yarn Y on the contact portion 36 of the rod member 34. A guide plate 57 (see FIG. 2) is mounted on the cover 61 and the surrounding member 64 for guiding the yarn Y to the contact portion 36 of the rod member 34 when introducing the yarn Y into the yarn path of the tension sensor 6.

In this manner, at the bottom of the recess 61a of the cover 61 that causes the front end portion 34a of the rod member 34 to protrude is arranged the rod member 34 surrounded by the circular elastic member 63 with a small gap in between the rod member 34 and the circular elastic member 63. The circular elastic member 63 has adhesive properties. Accordingly, deterioration of a measurement accuracy of the yarn tension occurring due to invasion of fly waste inside the cover 61 that covers the deforming member 30 can be prevented.

As shown in FIG. 2, the base 20 includes a blow mechanism 70. The blow mechanism 70 includes air flow paths 71, 72, and 73. The air flow path 71 is formed inside the vertical wall portion 25 so as to extend in a vertical direction. A lower end portion 71b of the air flow path 71 is connected to a not shown air supplying source of the winding unit 1 via the casing 41. The air flow path 72 is formed inside an upper end portion of the side wall portion 21 and the upper wall portion 22 so as to extend in a horizontal direction from an upper end portion 71a of the air flow path 71. An air injection hole 74 that opens on the lower side and an air injection hole 75 that opens on the upper side are provided at a tip end portion of the air flow path 72. The air flow path 73 is formed inside a lower end portion of the side wall portion 21 such that the air flow path 73 is diverged from the lower end portion 71b of the air flow path 71, and extends in the horizontal direction. An air injection hole 76 that opens laterally is provided at a tip end portion of the air flow path 73.

In this manner, the blow mechanism 70 by which air can be injected into a predetermined portion of the tension sensor 6 is arranged on the base 20. By injecting air from the blow mechanism 70 at a predetermined timing, fly waste adhering to the tension sensor 6 can be removed and deposition of the fly waste on the tension sensor 6 can be prevented.

Next, the control section 15, the storage section 15a, the display unit 16, and the operation section 19 are explained. The winding unit 1 includes a calibration mechanism that calibrates correspondence between an electric signal output by the tension sensor and a tension value corresponding to the electric signal. The winding unit 1 can operate in an operation mode (winding mode) and a maintenance mode (calibration mode). In the operation mode, the yarn Y supplied from the yarn supplying bobbin B is wound to form the package P, and in the maintenance mode, the yarn tension measured by the tension sensor 6 is checked. The operating modes can be switched by the operation of the operation section 19. When the operating modes are switched, a control signal indicating the operating mode after switching is output to the control section 15.

The control section 15 controls each part of the winding unit 1. When the winding unit 1 is operating in the operation mode, the control section 15 feedback controls the gate-type tenser 5 such that a predetermined tension is applied to the running yarn Y based on the yarn tension measured by the tension sensor 6.

The storage section 15a stores therein a display value table. The display value table contains a correspondence relation between input voltages (electric signals) input into the control section 15 and tension values to be displayed on the display unit 16.

When the winding unit 1 is operating in the maintenance mode, the control section 15 stops rotation of the winding drum 17 and controls the gate-type tenser 5 so as to release the yarn Y. That is, the fixed gate and the movable gate of the gate-type tenser 5 are disengaged so that no tension is applied to the yarn Y. The control section 15 receives the tension value of the yarn Y measured by the tension sensor 6 from the detection section 40 and causes the display unit 16 to display the tension value. Moreover, the control section 15 adjusts a relation between the yarn tension measured by the tension sensor 6 and the tension applied to the yarn Y.

The operation section 19 includes up and down keys. The values displayed on the display unit 16 can be changed by using the up and downs keys of the operation section 19. When the displayed tension value is changed by the operation of the operation section 19, the values before (the measured yarn tension) and after change are output to the control section 15.

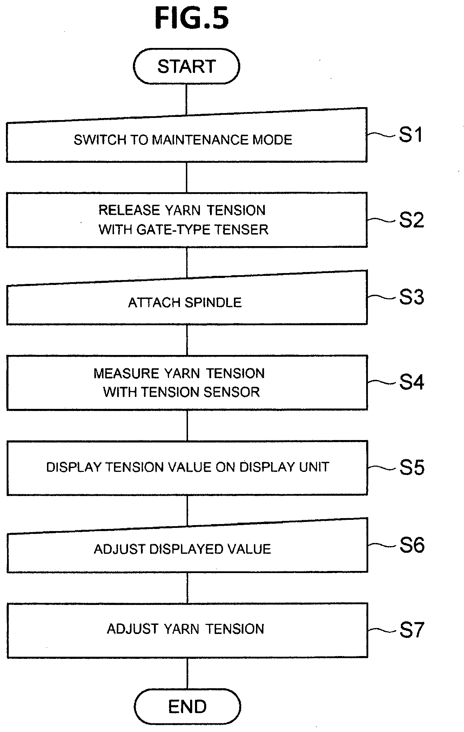

How the tension is checked in the winding unit 1 by the control of the control section 15 is explained below with reference to FIG. 5. First, an operator operates the operation section 19 to switch the operating mode to the maintenance mode (Step S1, first process). Thereafter, the control section 15 outputs a control signal to the gate-type tenser 5 to release the yarn Y (Step S2).

The operator attaches a spindle having a known weight to the yarn Y on the upstream side of the tension sensor 6 (Step S3, second process). Accordingly, a known tension Ti is added to the current tension detected by the tension sensor 6. In this state, the tension sensor 6 measures the yarn tension (Step S4, third process). Thereafter, the control section 15 causes the display unit 16 to display the tension value of the yarn Y measured by the tension sensor 6 (Step S5, fourth process). Accordingly, the operator can check the yarn tension measured by the tension sensor 6.

After checking the tension value displayed on the display unit 16, the operator changes the tension value, if required (Step S6). Particularly, the operator checks whether the tension value displayed on the display unit 16 is the same as the known tension Ti. If the displayed tension value is Ta, that is, different from the known tension Ti, the operator operates the operation section 19 to change the tension value on the display unit 16 to the tension Ti. On the other hand, if the tension value displayed on the display unit 16 is Ti, the operator judges that there is no deviation in the measurement accuracy of the tension sensor 6 and ends adjustment of the tension sensor 6.

If the operation section 19 is operated and the tension value is changed at Step S6, the control section 15 adjusts the yarn tension (Step S7, fifth process) to the changed tension value. Consequently, a detection accuracy of the tension sensor 6 is adjusted.

How the yarn tension is adjusted is explained below using a concrete example. In this example, when the known tension Ti is applied, it is assumed that the tension Ta is displayed on the display unit 16 as the yarn tension measured by the tension sensor 6. In this example, the operator operates the operation section 19 and changes the tension Ta displayed on the display unit 16 to the tension Ti.

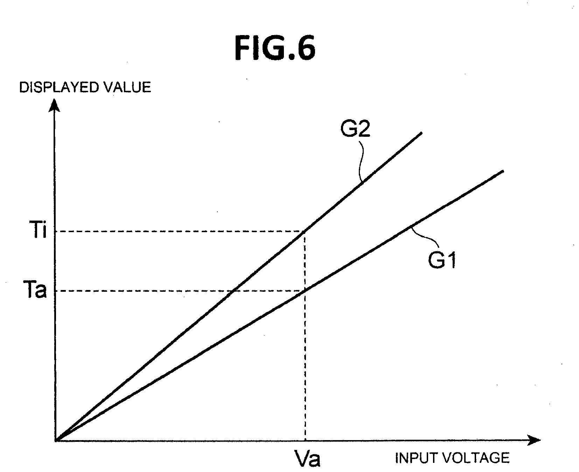

FIG. 6 is a graphical representation of an example of the display value table stored in the storage section 15a. As shown in FIG. 6, for example, when a voltage input from the tension sensor 6 to the control section 15 is a voltage Va, then a tension value Ta is displayed on the display unit 16.

When the tension value displayed on the display unit 16 is changed from the tension Ta to the tension Ti by the operation of the operation section 19, the control section 15 refers to the display value table and recognizes that the input voltage that corresponds to the tension Ti after change is the voltage Va. That is, an attribute G1 of the measurement value of the tension sensor 6 and the input voltage is changed to an attribute G2, as shown in FIG. 6.

As described above, the winding unit 1 includes the maintenance mode that is the operating mode for checking the yarn tension measured by the tension sensor 6. Accordingly, the operator can check the tension measured by the tension sensor 6 without detaching the tension sensor 6. Moreover, the known tension Ti can be compared with the yarn tension measured by the tension sensor 6 and the measurement accuracy of the tension sensor 6 can be easily checked.

In the maintenance mode, the control section 15 displays on the display unit 16 information relating to the yarn tension measured by the tension sensor 6. Accordingly, the operator can easily check the tension measured by the tension sensor 6 without detaching the tension sensor 6. Moreover, the known tension Ti can be compared with the yarn tension measured by the tension sensor 6 and the measurement accuracy of the tension sensor 6 can be checked even more easily.

The winding unit 1 includes the gate-type tenser 5 that applies the predetermined tension to the yarn Y. In the operation mode, the control section 15 holds the yarn Y such that the predetermined tension is applied to the yarn Y, based on the yarn tension measured by the tension sensor 6. In contrast, in the maintenance mode, the control section 15 controls the gate-type tenser 5 so as to release the yarn Y. Because the yarn Y is in a released state when the accuracy of the tension sensor 6 is being checked in the maintenance mode, the measurement accuracy of the tension sensor 6 can be accurately checked.

The winding unit 1 includes the control section 15 that adjusts the relation between the yarn tension measured by the tension sensor 6 and the known tension Ti in the maintenance mode. Therefore, the yarn tension measured by the tension sensor 6 can be adjusted to an appropriate value.

In the method of checking the tension explained above, the known tension Ti is applied to the yarn Y after the operating mode is switched to the maintenance mode, the tension on the yarn Y is measured with the tension sensor 6, and the measured tension is displayed on the display section. Accordingly, the operator can check the yarn tension measured by the tension sensor 6 without detaching the tension sensor 6. Moreover, the known tension Ti can be compared with the yarn tension measured by the tension sensor 6 and the measurement accuracy of the tension sensor 6 can be easily checked.

Exemplary embodiments of the present invention have been explained above. It is needless to say that the present invention is not limited to the embodiments described above. For example, in the above embodiments, the winding unit 1 includes the display unit 16; however, an external device, such as a computer, that is different from the winding unit 1, can be connected to the winding unit 1 and the yarn tension measured by the tension sensor 6 can be displayed on the external device.

Moreover, in the above embodiments, the control section 15 adjusts attributes of the display value and the input voltage of the control section 15 when adjusting the tension of the tension sensor 6; however, the tension of the tension sensor 6 can be adjusted by other methods. For example, an attribute adjustment volume, etc., of the substrate of the tension sensor can be adjusted to thereby adjust an output of the tension sensor itself.

Furthermore, the control section 15 displays the yarn tension measured by the tension sensor 6 on the display unit 16; however, the display of the tension on the display unit 16 is not limited to display in numeric characters. Moreover, the spindle is used to add the known tension; however, a spring, etc., can be used instead of the spindle. The tension of the tension sensor 6 is checked in a static state of the winding drum 17, i.e., after stopping the rotation of the winding drum 17. However, the tension of the tension sensor 6 can be checked in a dynamic state of the winding drum 17, i.e., while the winding drum 17 is rotating.

A yarn winding apparatus according to an aspect of the present invention winds a yarn supplied from a yarn supplying bobbin to form a package. The yarn winding apparatus includes a tension sensor that measures a yarn tension of the yarn wound to form the package, and a calibration mechanism that calibrates a correspondence between an electric signal output by the tension sensor and a tension value corresponding to the electric signal.

In the above yarn winding apparatus, the yarn tension measured by the tension sensor can be checked and calibrated. The operator can check the yarn tension measured by the tension sensor without detaching the tension sensor. Moreover, a known tension applied to the yarn can be compared with the yarn tension measured by the tension sensor making it easy to check the measurement accuracy of the tension sensor.

The yarn winding apparatus further includes a control section capable of executing a plurality of operating modes. The operating modes include a calibration mode in which the calibration is performed by the calibration mechanism. The yarn winding apparatus further includes a display section capable of displaying information. When the operating mode is the calibration mode, the control section causes the display section to display information relating to the yarn tension measured by the tension sensor.

The yarn winding apparatus further includes a tension applying section that applies a predetermined tension to the yarn. The operating modes include a winding mode in which a yarn is unwound from a yarn supplying bobbin and then wound to form a package. When the operating mode is the winding mode, the control section causes the tension applying section to hold the yarn such that the predetermined tension is applied to the yarn, and when the operating mode is the calibration mode, the control section causes the tension applying section to release the yarn. Because the yarn is in a released state when the accuracy of the tension sensor is being checked in the calibration mode, the measurement accuracy of the tension sensor can be accurately checked.

The yarn winding apparatus according to the present invention further includes an adjustment section that adjusts a relation between the yarn tension measured by the tension sensor and the tension applied to the yarn in the calibration mode. Accordingly, the yarn tension measured by the tension sensor can be adjusted to an appropriate value.

A method of checking a yarn tension on a yarn according to another aspect of the present invention is implemented in the yarn winding apparatus. The method includes switching the operating mode to the calibration mode by the control section, applying a known tension to the yarn, measuring the yarn tension with the tension sensor, and displaying the yarn tension measured by the tension sensor.

In the above method, the known tension is applied to the yarn after the operating mode is switched to the calibration mode, a yarn tension is measured by the tension sensor, and the measured yarn tension is displayed. Accordingly, the operator can check the yarn tension measured by the tension sensor without detaching the tension sensor. Moreover, the known tension can be compared with the yarn tension measured by the tension sensor making it easy to check the measurement accuracy of the tension sensor.

The method further includes changing attributes of the displayed yarn tension and an electric signal of the control section. Accordingly, the electric signal of the control section can be adjusted to a value that corresponds to the known tension.

According to the present invention the measurement accuracy of the tension sensor can be easily checked.

Although the invention has been described with respect to specific embodiments for a complete and clear disclosure, the appended claims are not to be thus limited but are to be construed as embodying all modifications and alternative constructions that may occur to one skilled in the art that fall within their scope.

## Claims

1. A yarn winding apparatus (1) comprising:
a tension sensor (6) adapted to measure a yarn tension of a yarn wound to form a package;
a calibration mechanism adapted to calibrate a correspondence between an electric signal output by the tension sensor (6) and a tension value corresponding to the electric signal;
a control section (15) adapted to execute a plurality of operating modes, wherein the operating modes include a calibration mode for performing calibration by using the calibration mechanism; and
a tension applying section (5) adapted to apply a predetermined tension to the yarn,
wherein the operating modes include a winding mode in which a yarn is unwound from a yarn supplying bobbin and then wound to form a package, and
wherein the control section (15) is adapted to cause the tension applying section to hold the yarn such that the predetermined tension is generated in the yarn when the operating mode is the winding mode, and to cause the tension applying section (5) to release the yarn when the operating mode is the calibration mode,
**characterized by** an adjustment section (15) adapted to adjust a relation between the yarn tension measured by the tension sensor (6) and the tension applied to the yarn in the calibration mode.

2. The yarn winding apparatus (1) according to Claim 1, further comprising a display section adapted to display information, wherein
the control section (15) is adapted to cause the display section to display information relating to the yarn tension measured by the tension sensor (6) when the operating mode is the calibration mode.

3. A method of checking a yarn tension that is implemented in the yarn winding apparatus (1) according to any one of Claims 1 to 2, the method comprising:
switching the operating mode to the calibration mode by the control section (15);
applying a known tension to the yarn after performing the switching;
measuring a yarn tension with the tension sensor (6) after performing the applying; and
displaying the tension measured by the tension sensor (6) .

4. The method according to Claim 3, further comprising changing attributes of the displayed tension and an electric signal input from the tension sensor (6) into the control section (15) after performing the displaying.

## Patentansprüche

1. Eine Garnwickelvorrichtung (1), die folgende Merkmale aufweist:
einen Spannungssensor (6), der angepasst ist, um eine Garnspannung eines Garns zu messen, das gewickelt wird, um einen Wickelkörper zu bilden;
einen Kalibrierungsmechanismus, der angepasst ist, um eine Entsprechung zwischen einem elektrischen Signal, das durch den Spannungssensor (6) ausgegeben wird, und einem Spannungswert, der dem elektrischen Signal entspricht, zu kalibrieren;
einen Steuerabschnitt (15), der angepasst ist, um eine Mehrzahl von Betriebsmodi auszuführen, wobei die Betriebsmodi einen Kalibrierungsmodus zum Durchführen einer Kalibrierung durch Verwenden des Kalibrierungsmechanismus beinhalten; und
einen Spannungsausübungsabschnitt (5), der angepasst ist, um eine vorbestimmte Spannung auf das Garn auszuüben,
wobei die Betriebsmodi einen Wickelmodus beinhalten, bei dem ein Garn von einer Garnvorratsspule abgewickelt wird und dann gewickelt wird, um einen Wickelkörper zu bilden, und
wobei der Steuerabschnitt (15) angepasst ist, um zu bewirken, dass der Spannungsausübungsabschnitt das Garn derart hält, dass die vorbestimmte Spannung in dem Garn erzeugt wird, wenn der Betriebsmodus der Wicklungsmodus ist, und zu bewirken, dass der Spannungsausübungsabschnitt (5) das Garn loslässt, wenn der Betriebsmodus der Kalibrierungsmodus ist,
**gekennzeichnet durch** einen Anpassungsabschnitt (15), der angepasst ist, eine Beziehung zwischen der Garnspannung, die durch den Spannungssensor (6) gemessen wird, und der Spannung, die auf das Garn ausgeübt wird, in dem Kalibrierungsmodus, anzupassen.

2. Die Garnwickelvorrichtung (1) gemäß Anspruch 1, die ferner einen Anzeigeabschnitt aufweist, der angepasst ist, um Informationen anzuzeigen, wobei:
der Steuerabschnitt (15) angepasst ist, um zu bewirken, dass der Anzeigeabschnitt Informationen in Bezug auf die Garnspannung anzeigt, die durch den Spannungssensor (6) gemessen wird, wenn der Betriebsmodus der Kalibrierungsmodus ist.

3. Ein Verfahren zum Überprüfen einer Garnspannung, das in der Garnwickelvorrichtung (1) gemäß einem der Ansprüche 1 bis 2 implementiert wird, wobei das Verfahren folgende Schritte aufweist:
Umschalten des Betriebsmodus durch den Steuerabschnitt (15) in den Kalibrierungsmodus;
Ausüben einer bekannten Spannung auf das Garn nach einem Durchführen des Umschaltens;
Messen einer Garnspannung mit dem Spannungssensor (6) nach einem Durchführen des Ausübens; und
Anzeigen der Spannung, die durch den Spannungssensor (6) gemessen wird.

4. Das Verfahren gemäß Anspruch 3, das ferner ein Ändern von Attributen der angezeigten Spannung und eines elektrischen Signals, das von dem Spannungssensor (6) in den Steuerabschnitt (5) eingegeben wird, nach einem Durchführen des Anzeigens, aufweist.

## Revendications

1. Appareil de bobinage de fils (1) comprenant:
un capteur de tension (6) adapté pour mesurer une tension de fil d'un fil bobiné pour former un paquet;
un mécanisme de calibrage adapté pour calibrer une correspondance entre un signal électrique sorti par le capteur de tension (6) et une valeur de tension correspondant au signal électrique;
un segment de commande (15) adapté pour exécuter une pluralité de modes de fonctionnement, où les modes de fonctionnement comprennent un mode de calibrage pour effectuer un calibrage à l'aide du mécanisme de calibrage ; et
un segment d'application de tension (5) adapté pour appliquer une tension prédéterminée au fil,
où les modes de fonctionnement comprennent un mode de bobinage dans lequel un fil est déroulé d'une bobine d'alimentation de fil et ensuite bobiné pour former un paquet, et
où le segment de commande (15) est adapté pour amener le segment d'application de tension à maintenir le fil de sorte que la tension prédéterminée soit générée dans le fil lorsque le mode de fonctionnement est le mode de bobinage, et pour amener le segment d'application de tension (5) à libérer le fil lorsque le mode de fonctionnement est le mode de calibrage,
**caractérisé par** un segment de réglage (15) destiné à régler un rapport entre la tension de fil mesurée par le capteur de tension (6) et la tension appliquée au fil en mode de calibrage.

2. Appareil de bobinage de fils (1) selon la revendication 1, comprenant par ailleurs un segment d'affichage adapté pour afficher des informations, dans lequel
le segment de commande (15) est adapté pour amener le segment d'affichage à afficher les informations relatives à la tension de fil mesurée par le capteur de tension (6) lorsque le mode de fonctionnement est le mode de calibrage.

3. Procédé de vérification d'une tension de fil qui est mis en oeuvre dans l'appareil de bobinage de fils (1) selon l'une quelconque des revendications 1 à 2, le procédé comprenant le fait de:
commuter le mode de fonctionnement au mode de calibrage par le segment de commande (15);
appliquer une tension connue sur le fil après exécution de la commutation;
mesurer une tension de fil par le capteur de tension (6) après exécution de l'application; et
afficher la tension mesurée par le capteur de tension (6).

4. Procédé selon la revendication 3, comprenant par ailleurs le fait de changer les attributs de la tension affichée et d'un signal électrique entré du capteur de tension (6) dans le segment de commande (15) après exécution de l'affichage.
